# EUROPÄISCHE PATENTSCHRIFT

(11) **EP 0 666 983 B1**
(45) Veröffentlichungstag und Bekanntmachung des Hinweises auf die Patenterteilung: **12.02.1997**
(21) Anmeldenummer: 93909831.5
(22) Anmeldetag: 21.04.1993
(51) Int. Cl.: G01N 29/18, G01N 29/00

(54) **SENSOR MIT HOHER EMPFINDLICHKEIT**
HIGH SENSITIVITY SENSOR
CAPTEUR DE HAUTE SENSIBILITE

(30) Priorität: 30.04.1992 DE 4214451
(43) Veröffentlichungstag der Anmeldung: 16.08.1995
(73) Patentinhaber: FRAUNHOFER-GESELLSCHAFT ZUR FÖRDERUNG DER ANGEWANDTEN FORSCHUNG E.V., 80636 München (DE)
(72) Erfinder: GIESLER, Thomas, D-66132 Bischmisheim (DE); MEYER, J.-Uwe, D-66386 St. Ingbert-Hassel (DE)
(86) Internationale Anmeldenummer: EP9300969
(87) Internationale Veröffentlichungsnummer: WO9322669

(56) Entgegenhaltungen:
- US-A- 4 895 017
- SENSORS AND ACTUATORS B CHEMICAL Bd. 87, Nr. 1/3, März 1992, Seiten 602 - 605 , XP287011 C.CALIENDO ET AL. 'Acoustic Love-wave sensor for k+ concentration in H20 solutions'

## Beschreibung

Die Erfindung betrifft einen Sensor mit den Merkmalen der im Oberbegriff des Patentanspruchs 1 beschriebenen Gattung.

Die heutige technische Entwicklung macht es erforderlich, die Anwesenheit von chemischen oder biochemischen Substanzen und deren Konzentrationen und die Messung von anderen physikalischen Größen und deren Änderungen in Form eines elektrischen Signales zur Verfügung zu stellen. Dazu werden Sensoren verwendet, deren prinzipielle Aufgabe in der Überführung der chemischen und der biochemischen Reaktionen bzw. des Nachweises der Existenz bzw. der Änderung von anderen physikalischen Größen in elektrische Signale besteht, was häufig mit elektronischen Mitteln geschieht. Anwendungsgebiete derartiger Sensoren sind beispielsweise die Prozeßüberwachung, die Detektion von Verunreinigungen, die Erstellung von Analysen, die Abgasemissionsüberwachung, die Gewässerüberwachung, Gasalarmsysteme und die Medizintechnik.

Als Sensoren mit hoher Empfindlichkeit eignen sich die massesensitiven Wandler, die auch gravimetrische Sensoren genannt werden. Diese Gruppe von Sensoren reagiert beispielsweise auf die Anlagerung bzw. die Veränderung der Anlagerung der gesuchten Substanz am Sensor, auf dem zu diesem Zweck eine chemisch aktive Beschichtung angebracht ist. Die Sensoren sind als elektromechanische Resonanzkreise ausgelegt. Unter Einsatz von elektrischen Schwingungen und einer entsprechenden Rückkopplung wird die mechanische Komponente des Sensors in Schwingungen versetzt. Verwendet man in dem Resonator fortlaufende Wellen, so wird die Resonanzfrequenz von der Phasengeschwindigkeit der Wellen und evtl. der eingeprägten Wellenlänge bestimmt.

So sind beispielsweise Sensoren bekannt, die mit akustischen Oberflächenwellen arbeiten. Dabei wird eine piezoelektrische Schicht als mechanischer Teil des Resonators verwendet.

Auf die piezoelektrische Schicht werden Interdigitalstrukturen aufgedampft, die dann mittels elektrischer Anregung fortlaufende akustische Oberflächenwellen erzeugen und längs der piezoelektrischen Schicht aussenden. Eine weitere auf der piezoelektrischen Schicht aufgebrachte Interdigitalstruktur arbeitet als Empfänger, indem sie die vom Sender ausgesandten akustischen Oberflächenwellen wieder aufnimmt und in ein elektrisches Signal umwandelt. Zwischen Sender und Empfänger ist ein elektronischer Verstärker angeordnet. Der Verstärker dient der Rückkopplung zwischen Empfänger und Sender bzw. dem Ausgleich der Verluste. So entsteht ein dämpfungsfrei schwingendes System.

Der mechanische Schwinger kann auf einer oder beiden Seiten mit einer chemisch aktiven Beschichtung versehen sein, die selektiv für die gesuchte Substanz wirkt. Es kommt dann zur Anlagerung der gesuchten Substanz an die chemische Beschichtung bzw. den Schwinger. Dadurch kommt es zu einer Masseänderung oder einer Änderung der Oberflächeneigenschaften des Schwingers. Dies führt wiederum zur Änderung der Resonanzfrequenz bzw. zur Änderung der Ausbreitungsgeschwindigkeit der Wellen. Dabei entsteht eine Frequenzverschiebung des Resonanzkreises, und somit kann die Anlagerung der gesuchten Substanz durch ein elektrisches Signal ausgewertet werden.

Die Ausbreitungsgeschwindigkeit der akustischen Oberflächenwellen wird einmal durch die Materialeigenschaften der piezoelektrischen Schicht und zum anderen durch deren Oberflächeneigenschaften bestimmt. Durch Veränderung der Eigenschaften des Schwingers verschiebt sich die Oszillatorfrequenz. Die Empfindlichkeit ist umgekehrt proportional zur Wellenlänge bzw. proportional zur Frequenz. Akustische Oberflächenwellen-Sensoren können mit hohen Frequenzen bei mehreren 100 MHz betrieben werden. Sie erreichen deshalb eine große Empfindlichkeit. Die Arbeit mit hohen Frequenzen bringt jedoch andere Nachteile mit sich. Es ist eine aufwendige, teuere und störanfällige Elektronik und ein Aufbau nach Hochfrequenzkriterien erforderlich. Ein derartiger Sensor strahlt VHF-Wellen ab und kleine Wellenlängen erfordern sehr feine Interdigitalstrukturen, die Herstellungsprobleme hervorrufen.

Wesentlich für den Einsatz der akustischen Oberflächenwellen-Sensoren ist die hohe Ausbreitungsgeschwindigkeit der Oberflächenwellen. Sie liegt normalerweise weit über der Schallgeschwindigkeit in Wasser oder in anderen Flüssigkeiten. Dies führt letztlich zu einem Versagen der Sensoren bei Einsatz in Flüssigkeiten. Liegt nämlich die Ausbreitungsgeschwindigkeit einer akustischen Oberflächenwelle über der Schallgeschwindigkeit einer umgebenden Flüssigkeit, so streut die Welle in die Flüssigkeit, da es durch den Energieverlust zu einer starken Dämpfung der Oberflächenwelle kommt. Der Einsatz von Oberflächenwellen-Sensoren ist daher in der Regel auf Gas- bzw. Dampfdetektion beschränkt.

Aus der US-PS 4,895,017 ist ein Sensor geoffenbart, der mit akustischen Oberflächenwellen arbeitet. Die Interdigitalstrukturen zur Erzeugung der akustischen Oberflächenwellen sind direkt und fest verbunden auf einer piezoelektrischen Schicht aufgebracht. Auf einem Teil der Interdigitalstrukturen ist eine chemisch aktive Beschichtung aufgebracht, die selektiv die gesuchte Substanz aufnehmen kann. Es kommt zur Anlagerung bzw. zum Eindringen der gesuchten Substanz in die aufgebrachte chemisch aktive Beschichtung. Der Gegenstand der US-PS 4,895,017 unterliegt den bereits vorstehend geschilderten Nachteilen bei Verwendung von akustischen Oberflächenwellensensoren.

Eine weitere gravimetrische Sensorklasse sind die Sensoren, die mit akustischen Plattenwellen arbeiten. Diese akustischen Plattenwellen breiten sich auf einer dünnen Membran aus und besitzen bei gleicher Wellenlänge viel kleinere Ausbreitungsgeschwindigkeiten als die in Sensoren, die mit akustischen Oberflächenwellen arbeiten. Der typische Aufbau eines Sensors, der mit akustischen Plattenwellen arbeitet, ist an den Aufbau eines Resonanzkreises mit akustischen Oberflächenwellen angelehnt. Ein mit Interdigitalstrukturen versehener Senderwandler und ein mit Interdigitalstrukturen versehener Empfängerwandler sind mittels eines rückgekoppelten elektronischen Verstärkers und einer dünnen Membran zu einem elektromechanischen Resonator kombiniert. Der Senderwandler erzeugt akustische fortschreitende Plattenwellen, die von dem Empfängerwandler aufgenommen werden. Die elektromechanische Wandlung erfolgt also hier über den Piezoeffekt. Auf eine Membran aus Siliziumnitrid wird zunächst eine Aluminiumschicht aufgedampft, die Aluminiumschicht dient dann als Träger für die piezoelektrische Schicht aus Zinkoxid, die beispielsweise mit Elektron-Magnetron-Sputtering aufgebracht wird. Schließlich werden auf die Zinkoxid-Schicht nun die sender- und empfängerseitigen Interdigitalstrukturen aufgedampft. Die Fingergruppen bzw. die Fingerzahlen werden so ausgeführt, daß eine Periode (Fingerpaar) exakt einer Wellenlänge bei Betrieb auf der Resonanzfrequenz entspricht. Die Wellenlängen liegen dabei in der Regel zwischen 10 und 1000 µm. Diese Membran dient als mechanischer Teil des Resonators und kann nun mit einer chemisch aktiven Schicht versehen werden, die selektiv für bestimmte Substanzen wirkt.

Beim "Aufsputtern" der Zinkoxid-Schicht entsteht eine Druckspannung. Diese führt in vielen Fällen zu einem Wellen der Membran oder zu einem Abplatzen der Schicht und ähnlichen Problemen. Dies tritt umso mehr auf, je dünner die Membran ist. Deshalb konnte bisher keine Verbundmembran dünner als ungefähr 3 µm hergestellt werden. Da die Empfindlichkeit des Sensors umso größer ist, je dünner die Membran ist, läßt sich also auch die Empfindlichkeit des mit einer piezoelektrischen Schicht arbeitenden akustischen Plattenwellensensors nicht mehr weiter steigern.

Aus der Veröffentlichung Sensors and Actuators, B Chemical, Bd. B7, Nr. 1/3, März 1992, Seiten 602-605; C. Caliendo et al.: "Acoustic Love-wave sensor für K⁺ concentration in H₂O solutions" ist ebenfalls ein Sensor geoffenbart, der mit akustischen Plattenwellen arbeitet. Auf der einen Seite eines Quarzkristalls sind die Interdigitalstrukturen des Senders und des Empfängers angebracht, während auf der anderen Seite der Quarzplatte eine PVC-Schicht aufgebracht ist. Diese PVC-Schicht ist wieder selektiv für die gesuchte chemische Substanz ausgeführt. Die gesuchte chemische Substanz ist hier in Wasser gelöst, weshalb an der PVC-Schicht eine entsprechende Masseschicht anliegt. Die Interdigitalstrukturen des Sendewandlers erzeugen akustische fortschreitende Plattenwellen, die vom Empfängerwandler aufgenommen werden. Die elektromechanische Wandlung erfolgt hier wiederum über den Piezoeffekt der PVC-Schicht. Auch der in der Veröffentlichung Sensors and Actuators, B Chemical, Bd. B7, geoffenbarte Sensor unterliegt den bereits vorstehend für gravimetrische Sensoren geschilderten Nachteilen, die eine Begrenzung der Empfindlichkeit für akustische Plattenwellen darstellen.

Ein weiterer Forschungsansatz zu einem gravimetrischen Sensor benützt die elektrostriktive Anregung von Plattenwellen. Es wird hier das "Aufsputtern" einer piezoelektrischen Schicht vermieden. Der Aufbau ist wie folgt.

Auf der einen Seite einer dünnen Siliziumnitridmembran ist eine dickere Aluminiumschicht aufgedampft. Auf der anderen Seite der Siliziumnitridmembran sind die Interdigitalstrukturen des Senderwandlers und des Empfängerwandlers aufgebracht. Die akustischen Plattenwellen werden wie folgt erzeugt. Zwischen den Fingern der Interdigitalstrukturen und der Aluminiumschicht liegt eine Gleichspannung, der eine Wechselspannung zur Erzeugung der akustischen Plattenwellen überlagert ist. Der elektrostriktive Effekt ist dabei eine Volumenänderung des Dielektrikums durch Polarisation. Die in Richtung eines äußeren elektrischen Feldes hintereinander liegenden elektrischen Dipole üben eine Anziehungskraft aufeinander aus, bei der sich die Moleküle solange annähern, bis die elastischen Gegenkräfte den elektrischen Kräften das Gleichgewicht halten.

Die so eingekoppelten mechanischen Spannungen erzeugen Plattenwellen, die sich längs der Verbundmembran ausbreiten. Im Empfängerwandler rufen die fortschreitenden Plattenwellen Dickenänderungen und Änderungen der Dielektrizitätskonstante der Nitridschicht hervor, die wiederum eine Kapazitätsänderung der aus Aluminiumschicht und Fingern gebildeten Kondensatoren bewirkt. Diese kann möglicherweise in ein elektrisches Signal umgewandelt werden. Die elektrische Auskopplung über die Dickenänderung wurde nur postuliert, nicht jedoch praktisch nachgewiesen.

Mit dem elektrostriktiven Verfahren lassen sich also nur relativ kleine Amplituden der akustischen Plattenwellen erreichen. Entsprechend gering sind die Größenordnungen der Leerlaufspannung und des Kurzschlußstroms des Empfängerwandlers. Es läßt sich nur ein bescheidenes Signal-Rauschverhältnis erzielen.

Ein weiteres Problem des elektrostriktiven Anregungsverfahrens ist die hohe Kapazität des Senderwandlers. Bei Ansteuerung mit den typischen Anregungsspannungen treten Blindleistungen im Bereich von 10 W auf, welche eine große Verlustleistung in der Ansteuerelektronik hervorrufen und deren Miniaturisierung verhindern. Somit ist die Realisierbarkeit eines rückgekoppelten Resonators nach diesem Prinzip sehr fraglich.

Zu dem gesamten genannten Stand der Technik wird noch verwiesen auf "Multisensor Employing an Ultrasonic Lamb-Wave Oscillator" IEEE Transactions on Electron Devices, Vol. 35, No 6, June 1988, Seiten 735 bis 742, ferner auf "Generalized Lambs-Wave Multisensor" IEEE 1988 Ultrasonics Symposium, Seiten 563 bis 567 und schließlich auf "Flexural Plate-Wave-Sensor: Chemical Vapor Sensor and Electrostrictive Excitation" IEEE 1989 Ultrasonics Symposium, Seiten 595 bis 598, wobei die Anmeldung von der Veröffentlichung "Flexural Plate-Wave Sensor: Chemical Vapor Sensing and Electrostrictive Excitation" ausgeht.

Der Erfindung liegt deshalb die Aufgabe zugrunde, einen für die Massenfertigung geeigneten, einfachen und preiswerten akusto-gravimetrischen Sensor, der mit einer Membran ausgerüstet ist, die Bestandteil eines elektromechanischen Resonatorkreises ist, zu schaffen, der für die Messung von gasförmigen und flüssigen Medien geeignet ist, der eine sehr hohe Empfindlichkeit aufweist und dazu die Verwendung einer möglichst dünnen Membran zuläßt und der darüberhinaus die Ermittlung der Position des Sensors mit großer Auflösung ermöglicht.

Diese Aufgabe wird erfindungsgemäß durch die im kennzeichnenden Teil des Patentanspruchs 1 angegebenen Merkmale gelöst. Vorteilhafte Weiterbildungen des Erfindungsgegenstandes sind in den Merkmalen der Unteransprüche 2 bis 21 gekennzeichnet.

Die Vorteile der Erfindung bestehen insbesondere darin, daß die Erzeugung der akustischen fortlaufenden Plattenwellen senderseitig allein auf elektrostatischem Wege und empfängerseitig die Erfassung des Eingangs- und die Auskopplung des Ausgangssignals rein auf kapazitivem Wege erfolgt. Dadurch wird es möglich, daß das Dielektrikum zwischen der Membran und den Interdigitalstrukturen auf der Sender- und Empfängerseite aus Luft bestehen kann, dadurch werden ungedämpfte Schwingungsbewegungen der Membran möglich bzw. es wird ein Dielektrikum derart gewählt, daß diese Schwingungsbewegungen der Membran möglich bleiben. Die Funktion des erfindungsgemäßen Sensors ist sowohl in gasförmigen wie auch in flüssigen Medien gegeben. Weitere Vorteile bestehen darin, daß durch die Trennung der Interdigitalstrukturen des Senderwandlers und des Empfängerwandlers von der Membran sich die akustischen Plattenwellen auf beliebigen Membranen oder Folien erzeugen lassen. Durch die Trennung dieser Interdigitalstrukturen und der Membran lassen sich auch verschiebliche Wandler erzeugen. Dadurch wird die Möglichkeit zur Entwicklung von Positionssensoren eröffnet. Es lassen sich extrem dünne Membranen in dem elektromechanischen Resonanzkreis verwenden, da beispielsweise bei Verwendung einer reinen Metallmembran es nicht zu den Problemen kommt, daß zwei Schichtmaterialien aufgrund verschiedener Ausdehnungskoeffizienten gegeneinander arbeiten. Durch die sehr dünnen Membranen läßt sich auch eine extrem hohe Empfindlichkeit des erfindungsgemäßen Sensors erzielen.

Bei dem elektrostatischen Verfahren können die akustischen Plattenwellen Amplituden von etwa 800 Å erreichen. Bei dem Empfängerwandler ist die Leerlaufspannung höher als bei dem elektrostriktiven Verfahren. Es ergibt sich damit ebenfalls eine bedeutend höhere Ausgangsspannung und ein sehr hohes Signal-Rauschverhältnis bei dem elektrostatischen Verfahren gegenüber dem elektrostriktiven Verfahren. Damit ist sowohl von der Größenordnung der Leerlaufspannung wie auch des Kurzschlußstroms und ebenso des Rauschabstandes das erfindungsgemäße elektrostatische Verfahren dem elektrostriktiven überlegen. Es bietet weit größere Reserven für die weitere elektronische Verarbeitung, durch die höheren Pegel werden sich auch kapazitive Einstreuungen und Störungen weit weniger auswirken.

Nachstehend wird die Erfindung anhand von Ausführungsbeispielen und von Zeichnungen noch näher erläutert:
- Figur 1: Der erfindungsgemäße Sensor mit einer homogenen Metallmembran,
- Figur 2: der erfindungsgemäße Sensor mit einer Membran aus einer dünnen Nitridschicht und einer aufgebrachten Metallschicht,
- Figur 3: eine Teilansicht im Schnitt der Interdigitalstrukturen eines Sender- bzw. Empfängerwandlers,
- Figur 4: ein Prinzipschaltbild des Empfängerwandlers,
- Figur 5: ein Prinzipschaltbild des elektromechanischen Resonanzkreises zur Meßwertauswertung mit direkter Rückkopplung,
- Figur 6: ein Prinzipschaltbild des elektromechanischen Resonanzkreises zur Meßwertauswertung mit direkter Rückkopplung erweitert um einen Phasenschieber,
- Figur 7: ein Prinzipschaltbild des elektromechanischen Resonanzkreises zur Meßwertauswertung mit indirekter Rückkopplung über PLL,
- Figur 8: ein Prinzipschaltbild des elektromechanischen Resonanzkreises zur Meßwertauswertung mittels Phasenmessung,
- Figur 9: eine Anordnung der Membran mit einem Festkörper in dem Spalt zu den Interdigitalstrukturen der Sender- und Empfängerwandlern und
- Figur 10: eine symmetrische Anordnung der Interdigitalstrukturen beidseits der Membran.

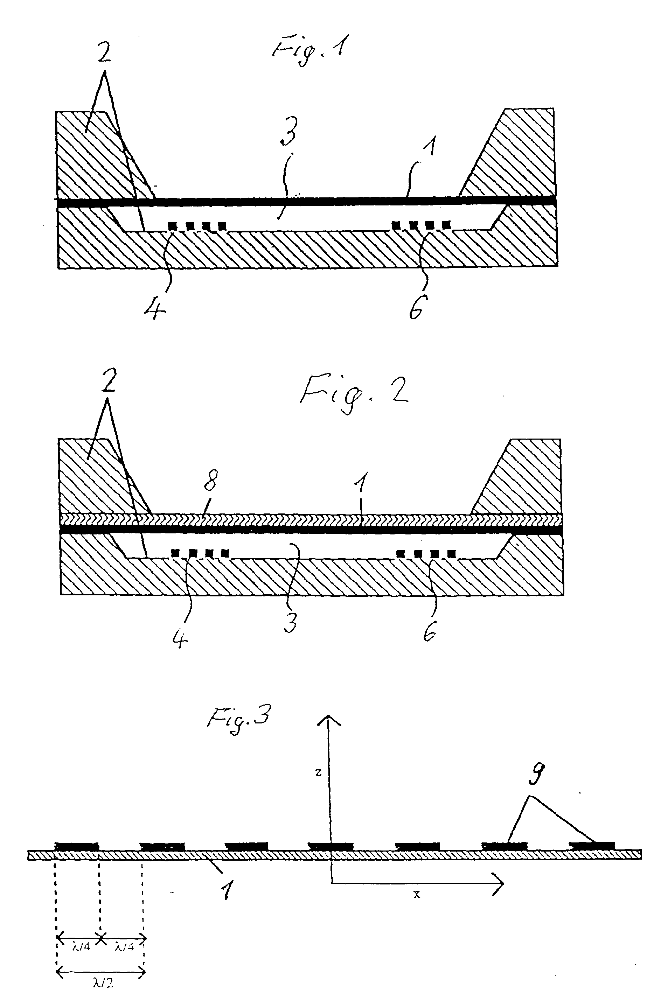

In Figur 1 ist ein erstes Ausführungsbeispiel des erfindungsgemäßen Sensors mit hoher Empfindlichkeit in einer Prinzipdarstellung ersichtlich. Eine Membran 1 ist an einem Träger 2 befestigt. Senderseitig ist die Membran 1 und die Interdigitalstrukturen 4 des Senderwandlers 5 ebenso wie empfängerseitig die Membran 1 und die Interdigitalstrukturen 6 des Empfängerwandlers 7 jeweils voneinander in einem räumlichen Abstand getrennt in Form eines schmalen Spaltes 3 angeordnet. Zu diesem Zweck ist der schmale Spalt 3 als ein Dielektrikum derart ausgebildet, daß in dem Dielektrikum eine Bewegung der Membran 1 zu den Interdigitalstrukturen 4 und 6 hin möglich ist. Senderwandler 5 und Empfängerwandler 7 sind in einem Streckenabstand zueinander angeordnet, damit die Plattenwellen die Membran 1 durchlaufen können.

Die Membran 1 besteht beispielsweise allein aus einer homogenen Metallfolie. Die Dicke der Membran kann sich im µm-Bereich bewegen, beispielsweise durch mikromechanische Herstellung. Dazu kann Aluminium oder jede andere für einen derartigen Zweck geeignete Metallfolie verwendet werden. Die Metallmembran 1 kann jedoch auch aus einer Metallschicht bestehen, die auf eine dünne nichtleitende Siliziumnitridschicht 8 aufgebracht ist, siehe Figur 2. Die Membran 1, 8 kann dabei auf der den Interdigitalstrukturen 4 und 6 abgewandten Seite mit einer chemisch aktiven Beschichtung versehen sein. Durch diese chemisch selektive Beschichtung läßt sich ein Rezipient für spezielle Moleküle bzw. Chemikalien schaffen, die sich dann bei Benetzung mit der Folie dort anlagern. Die Empfindlichkeit des Sensors bzw. des später noch näher beschriebenen Resonatorkreises wird von der Membranmasse beeinflußt. Lagert sich eine Substanz an eine aufgebrachte chemische aktive Schicht oder an die Membran direkt an, so verändert sich die Membranmasse, was dann zu einer Resonanzfrequenzverschiebung führt. Die Empfindlichkeit gegenüber Masseanlagerungen eines solchen Resonators ist umgekehrt proportional zur Dichte der Gesamtmembran und zur Dicke der Gesamtmembran. Ist beispielsweise der Werkstoff für die Membran vorgegeben, so läßt sich das Flächengewicht nur über die Dicke der Membran noch beeinflussen. Die Sensorempfindlichkeit steigt also bei fallender Membrandicke. Zur Erzielung einer hohen Empfindlichkeit ist daher eine möglichst dünne Membran anzustreben.

Zum Senden und Empfangen von akustischen fortlaufenden Plattenwellen werden Interdigitalstrukturen 4 und 6 verwendet. Sie sind aufgrund ihrer selektiven Filtereigenschaften geeignet, Wellenlänge und Mode der Plattenwellen festzulegen. Um die Funktionsfähigkeit des Sensors in Flüssigkeiten zu ermöglichen, wird eine möglichst geringe Ausbreitungsgeschwindigkeit angestrebt, dazu ist A₀-Mode am besten geeignet. In diesem Mode geht die Ausbreitungsgeschwindigkeit mit fallender Plattendicke gegen Null. Die Interdigitalstrukturen sowohl des Senderwandlers 5 wie des Empfängerwandlers 7 bestehen aus jeweils zwei Fingergruppen von entsprechend gewählter Fingerlänge, Fingerbreite und Fingerzahl, wobei die Fingerzahl die Güte des Filters beeinflußt. Die beiden Fingergruppen des Sender- bzw. Empfängerwandlers sind ineinander geschoben angeordnet. Der jeweilige gesamte Wandler besteht aus n-Fingern und sendet entlang der Membran 1 in positive und in negative x-Richtung akustische Plattenwellen aus, siehe Figur 3. Jeder der n-Finger stellt für sich wiederum einen Elementarwandler dar. Alle derartige Elementarwandler sind jeweils im Abstand von λ/2 angeordnet und schwingen um 180° phasenverschoben, um eine kohärente Übertragung zu erreichen. Die beiden Fingergruppen des elektrostatischen Senderwandlers werden also damit um 180° phasenverschoben angesteuert. Bei der kohärenten Wellenüberlagerung addieren sich dann die Amplituden.

Zwischen der Membran 1 und den Interdigitalstrukturen 4 und 6 der Sender- und Empfängerwandler ist eine Gleichspannung angelegt. Beim Senderwandler 5 wird den Interdigitalstrukturen 4 eine Wechselspannung überlagert, die dann zur Anregung der akustischen Plattenwellen dient. In denjenigen Positionen, in denen Wandlerfinger angeordnet sind, wird damit die Membran mit einem harmonisch wechselnden Druck beaufschlagt und schwingt entsprechend. Jeder der einzelnen Elementarwandler sendet in beide Richtungen jeweils symmetrisch Plattenwellen aus. Diese überlagern sich dann und bilden die resultierende Plattenwelle, die die Interdigitalstrukturen des Senders an seinen beiden Seiten verläßt. Die Erzeugung der akustischen fortlaufenden Plattenwellen erfolgt also im Senderwandler mittels der Membran und den Interdigitalstrukturen allein aufgrund elektrostatischer Anziehungskraft bzw. Anregung. Dies geschieht genauso bei der Erfassung und Auskopplung des Signals des Empfängerwandlers auf rein kapazitivem Wege. Die beiden Interdigitalstrukturen von Sender- und Empfängerwandler können gleich ausgebildet sein, jedoch ist bei Bedarf auch eine ungleiche Auslegung mit unterschiedlicher Fingerzahl möglich.

So wie die Interdigitalstrukturen 4 und die Membran 1 Kondensatoren bilden, so werden auch beim Empfängerwandler durch die Membran 1 und seine Interdigitalstrukturen 6 Kondensatoren gebildet. Mit diesen Kondensatoren werden die vom Sender eingehenden akustischen fortlaufenden Plattenwellen mit ihrer Schwingungsamplitude direkt ausgekoppelt.

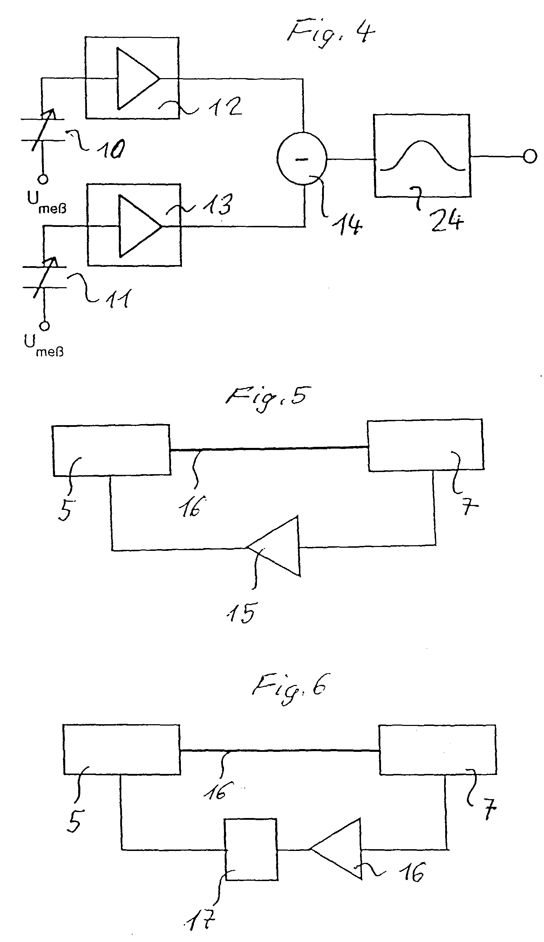

Da jede Interdigitalstruktur aus zwei ineinander verschränkt angeordneten Fingergruppen besteht, besitzt sowohl der Sender- wie der Empfängerwandler zwei Kondensatoren, die aus Membran und Fingergruppe gebildet werden. Die Ausgangssignale des Empfängerwandlers werden verstärkt, dann voneinander subtrahiert und bandbegrenzt. Aufgrund der λ/2-Anordnung der Einzelfinger addieren sich die beiden um 180° phasenverschobenen Signale des Empfängerwandlers und die Störeinstreuungen heben sich auf. Eine Blockschaltung des Empfängerwandlers ist in Figur 4 dargestellt. Sie besteht aus den zwei Kondensatoren 10 und 11, die von den beiden Fingergruppen der Interdigitalstrukturen mit der Membran gebildet werden, Verstärkern 12 und 13, Subtraktionsglied 14 und eventuell dem Bandpaßfilter 24, welches die Rauschbandbreite der elektronischen Komponenten 12, 13 und 14 einschränkt. Sowohl der Sende- wie auch der Empfangswandler arbeiten ebenfalls als schmalbandige Filter bzw. Resonatoren für eine durch die Materialeigenschaften der Membran bestimmte Frequenz.

Die Phasengeschwindigkeit der akustischen Plattenwellen kann als Meßgröße für ein auswertbares elektrisches Signal herangezogen werden. Sendet man Plattenwellen mit fest vorgegebener Frequenz vom Senderwandler über die Verzögerungsstrecke, so wird man am Empfängerwandler Plattenwellen der gleichen festen Frequenz empfangen können. Die Verzögerungsstrecke besteht dabei aus der Membran und allen auf die Membran einflußnehmenden Faktoren, wie beispielsweise Masseanlagerung an die Membran, die Dichte des die Membran umgebenden Mediums und andere Größen, die auf die Membran einwirken. Verändert sich nun die Phasengeschwindigkeit der akustischen fortlaufenden Plattenwellen, so verändert sich auch die gegenseitige Phasenlage zwischen Senderwandler und Empfängerwandler. Diese Phasendrift bildet damit die Ausgangsgröße des Sensors.

Um zu einem Sensor mit dem Ausgangsparameter der Frequenz zu kommen, schaltet man zwischen dem Empfängerwandler und dem Senderwandler einen Verstärker 15 ein, siehe dazu Figur 5. Die Verstärkung des Verstärkers 15 muß so groß gewählt, daß die Verluste des Senderwandlers, der Verzögerungstrecke aus der Membran und dem Empfängerwandler ausgeglichen werden. Ist dies erreicht, so schwingt der Kreis auf seiner typischen Resonanzfrequenz, die dann von der Phasengeschwindigkeit beeinflußt und verändert wird.

Schaltet man in den Rückkopplungszweig mit dem Verstärker 15 zusätzlich in Reihe einen Phasenschieber 17 (Figur 6), so kann man durch Verändern der Phasendrehung des Phasenschiebers die Frequenz auf die Mittenfrequenz des Sender- und Empfängerwandlers bzw. das Übertragungsmaximum einstellen. Bei der Auswahl des Verstärkers 15 und des Phasenschiebers 17 ist darauf zu achten, daß in den elektronischen Komponenten eine möglichst geringe Phasendrift auftritt, da diese zu einer Frequenzdrift und somit zu einer Verfälschung des Meßwertes führen würde. Diese Auswerteschaltung benötigt nur eine geringe Anzahl elektronischer Komponenten.

Bei der direkten Rückkopplung wird die Schwingungsfrequenz des elektromechanischen Resonators grob durch die Filtermittenfrequenz der Wandler bestimmt. Die exakte Festlegung erfolgt durch die Phasenbedingung zwischen Sender und Empfänger, die durch die Oszillationsbedingung gegeben ist. Bei Veränderung der Zeitkonstante der Verzögerungsstrecke verändert sich die Frequenz, da die Phasenlage eingeprägt ist. Die Frequenz ist somit Ausgangsgröße des Sensors und kann sehr leicht quasidigital erfaßt werden.

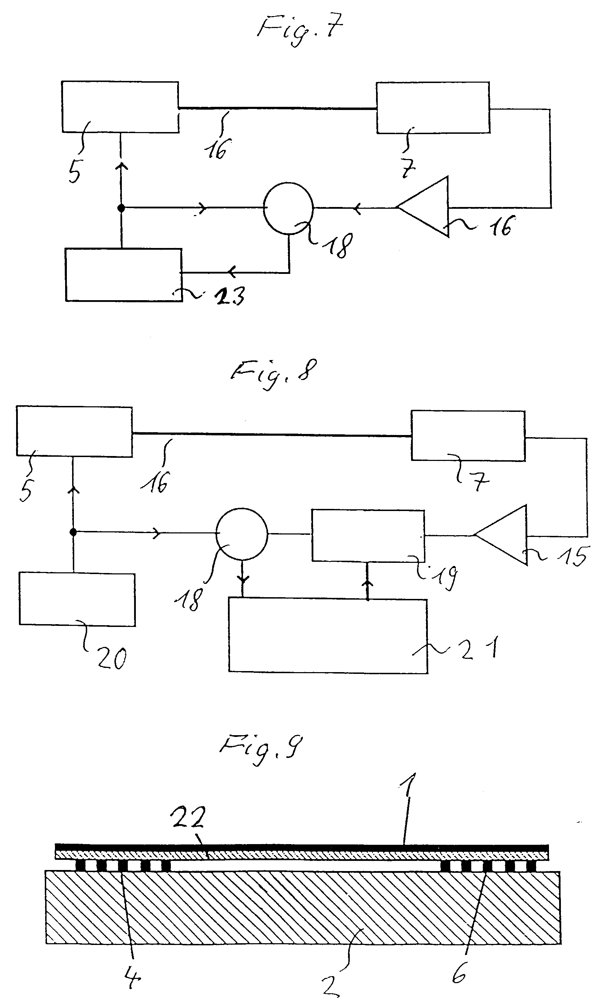

Das Blockschaltbild nach Figur 7 vermeidet die direkte Rückkopplung zwischen Empfängerwandler und Senderwandler durch Einfügen einer Phase-Lock-Loop. Mit Hilfe eines Voltage-Controlled-Oscillators 23, eines Phasencomparators 18 und eines in Figur 7 nicht eingezeichneten Tiefpasses wird die Phasenbedingung zwischen Senderwandler und Empfängerwandler eingehalten. Die Ausgangsamplitude des Voltage-Controlled-Oscillators 23 ist konstant, so daß beim Anschwingen wie auch im Normalbetrieb konstante Amplituden erreicht werden. Darüber hinaus werden Störeinstreuungen in den Verstärkerkreis und Rauschen nicht wieder verstärkt in die akustische Wellenstrecke eingekoppelt. Der Voltage-Controlled-Oscillator und der Phasencomparator können dabei digital und rechnergesteuert ausgeführt werden, was eine weitere Verbesserung der Systemeigenschaften ermöglicht.

Ein weiterer Vorteil der Schaltung nach Figur 7 ist die hohe Konstanz des Sendersignals. Über die Messung der Amplitude des Empfängerwandlersignals ist eine direkte Ableitung der Dämpfung der akustischen Strecke möglich, was bei manchen Sensoranwendungen vorteilhaft ist, z.B. bei der Dichtemessung.

In Figur 8 ist ein Blockschaltbild für die direkte Messung der Phasenlage zwischen Senderwandler und Empfängerwandler ersichtlich, das es ermöglicht, Veränderungen in der Phasengeschwindigkeit zu messen. Ein digitaler Phasencomparator 18 vergleicht die Phasenlage des als Referenzoszillator wirkenden Quarzoszillators 20 mit der Phasenlage des Empfängerwandlers 7. Ist ein festes Phasenverhältnis vorhanden, so gibt der Phasencomparator ein Signal an einen Rechner 21. Der Rechner ist dann in der Lage, die Phasenlage am Phasencomparator über ein digital steuerbares Verzögerungsglied, das aus einer Verzögerungsleitung 19 besteht, nachzusteuern. Der in dem Blockschaltbild nach Figur 8 gezeigte Schaltungsaufbau weist kaum analoge Komponenten auf. Mit dem Quarzoszillator besitzt er eine hoch genaue Referenz, konstante Anregungsamplitude und die Möglichkeit der digitalen Messung über rechnergesteuerte sukzessive Approximation der Phasenlage.

Die Membran, die aus einer homogenen Metallfolie oder aus einer aus Silizium hergestellten Nitridschicht mit einer aufgedampften Metallschicht besteht, wird durch die anliegende Gleichspannung zwischen der Membran und den Interdigitalstrukturen in Richtung der Digitalstrukturen angezogen. Wird die Spannungsdifferenz zwischen der Membran und den Interdigitalstrukturen zu hoch, so könnte die Membran auf den Interdigitalstrukturen zum Aufliegen kommen. Zur Verhinderung dieses Durchbiegungseffektes kann die Membran bei der Herstellung mit einer inneren Zugspannung versehen werden. Sind diese Zugspannungen groß genug, so wird ein Durchbiegen der Membran durch die elektrostatische Kraft auf die Interdigitalstrukturen verhindert. Die Reflexion der akustischen Plattenwellen am Rande der Membran kann dadurch verhindert, daß ein Teil der Seiten der Membran gekrümmt und/oder abgeschrägt ausgeführt ist. So wird verhindert, daß stehende Wellen oder andere Störungen von den Membranrändern reflektiert werden.

Nachfolgend werden noch weitere Maßnahmen aufgezeigt, die eine Durchbiegung der Membran bis zur Gegenelektrode der Interdigitalstrukturen verhindern können. So ist es beispielsweise möglich, daß in den schmalen Spalt 3 zwischen der Membran 1 und den Interdigitalstrukturen 4 und 6 der Sender- und Empfängerwandler 5 und 7 eine rauhe Isolationsschicht zur Erzeugung eines Luftpolsters eingebracht wird. In dem schmalen Spalt zwischen der Membran und den Interdigitalstrukturen der Sender- und Empfängerwandler kann auch ein hermetisch abgeschlossener Luftspalt vorgesehen sein, wobei dieser hermetisch abgeschlossene Luftspalt mit dem herrschenden Atmosphärendruck gefüllt sein kann.

Weiterhin kann in dem schmalen Spalt zwischen der Membran und den Interdigitalstrukturen der Sender- und Empfängerwandler eine dielektrische Feststoffstützstruktur mit hoher akustischer Impedanz eingefügt sein. In den schmalen Spalt 3 läßt sich als Dielektrikum zwischen der Membran und den Interdigitalstrukturen der Sender- und Empfängerwandler auch Flüssigkeit einfüllen. Der Spalt kann dabei als hermetisch abgeschlossener Flüssigkeitsspalt ausgebildet sein. Die Flüssigkeit ist kaum kompressibel und kann die erforderliche Gegenkraft gegen eine Membrandurchbiegung bereitstellen. Die an die Membran angrenzende Flüssigkeit verringert die effektive Membranmasse und somit die Sensorempfindlichkeit. Diese Variante ist daher nur für Sensoren geeignet, die für den Einsatz in Flüssigkeiten gedacht sind, da dort auch die andere Seite der Membran mit Flüssigkeit bedeckt ist. Es kommt damit maximal zu einer Halbierung der Empfindlichkeit des Sensors durch beidseitige Flüssigkeitsbenetzung.

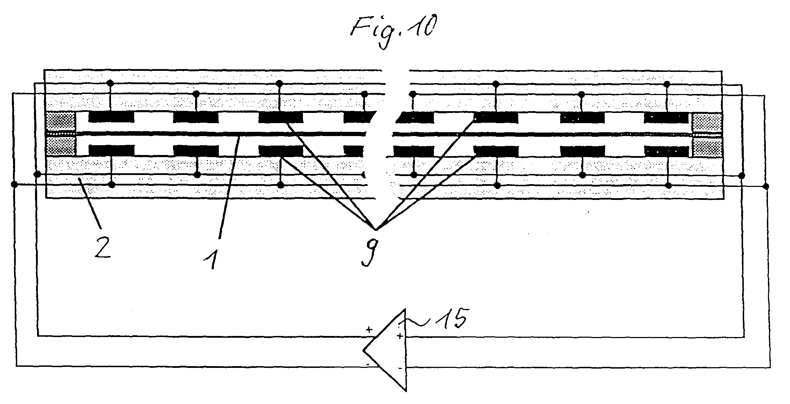

Legt man in den Spalt 3 zwischen der Membran 1 und den Interdigitalstrukturen 4 und 6 einen Festkörper mit sehr großer akustischer Impedanz, so können sich die Plattenwellen ohne merklichen Energieverlust ausbreiten, ohne daß dabei die Sensorempfindlichkeit stark vermindert würde, dadurch wäre auch eine geringe Kompressibilität gegeben. Eine abgewandelte Sensorform dazu ist aus Figur 9 ersichtlich. Sie wäre insbesondere für Gassensoren geeignet. Eine frei aufliegende Membran 1 liegt auf einem akustisch weichen Dielektrikum 22, das wiederum auf den Interdigitalstrukturen 4 und 5 der Sender- und Empfängerwandler 5 und 7 aufliegt, diese wiederum sind auf dem Träger 2 aufgebracht. Eine Anordnung dieser Art hat den Vorteil einer substratunabhängigen Membranherstellung und es können externe beidseitige Membranbeschichtungen vorgenommen werden und die Membranen können einfach ausgetauscht werden. Die Membran ist völlig spannungsfrei und es gibt keine Änderungen der Membranspannungen durch thermische Gehäuse- oder Substratausdehnungen. Atmosphärische Druckschwankungen können die Membran nicht beeinflussen und hohe Feldstärken sind erreichbar, was großen Amplituden entspricht. Die Membran muß entweder aus homogenem Metall bestehen oder mit einer Metallschicht versehen sein. Da die Membran auf einem festen Gleichspannungspotential gehalten werden muß, ist eine Verbindung zur Ansteuerelektronik erforderlich, was durch eine entsprechende elektrische Verbindung mittels Bonddraht möglich ist.

Bei all den genannten Ausführungsformen für das Dielektrikum ist der Spalt bzw. das Dielektrikum zwischen der Membran und den Interdigitalstrukturen der Sender- und Empfängerwandler jeweils gleich ausgebildet. Durch die Trennung der Membran von den Interdigitalstrukturen des Sender- und Empfängerwandlers können akustische Plattenwellen auf beliebigen Membranen und Folien erzeugt werden, dadurch ist es auch möglich, die Interdigitalstrukturen zu verschieben, und zwar sowohl beim Senderwandler wie auch beim Empfängerwandler. Der Sensor kann deshalb auch für Positionsmessungen verwendet werden. Ebenso auch für Messungen von Materialeigenschaften wie z.B. Elastizitätsmodul, Poissonkopplung, Biegesteifigkeit, Dicke und Flächengewicht von Folien und anderen Membranen in der Fertigungs-Qualitätskontrolle.

Eine weitere Möglichkeit, die Membrandurchbiegung infolge elektrostatischer Kräfte zu verhindern, ist aus Figur 10 ersichtlich. Durch die hier gezeigte symmetrische Anordnung der Interdigitalstrukturen beidseits der Membran sowohl für den Sender- wie auch für den Empfängerwandler verhindert das Entstehen einer einseitigen statischen Kraft auf die Membran. Es kommt damit zu keiner Durchbiegung und die Membran ist dennoch beidseitig frei zugänglich. Um einen Gasaustausch mit der Umgebung zu ermöglichen, können kleine Öffnungen in die beiden Träger der Elektroden geätzt werden. Diese Anordnung ist unempfindlich gegen Druckschwankungen. Das auskoppelbare Signal ist aufgrund der doppelten Elektrodenanzahl vergrößert. Die Anordnung ist allerdings nur für Gassensoren oder Sensoren in nichtleitender Flüssigkeit geeignet, da die Membran beidseitig unter dem Einfluß eines elektrostatischen Feldes steht.

### Bezugszeichenliste

- 1: Membran
- 2: Träger
- 3: Spalt
- 4: Interdigitalstrukturen
- 5: Senderwandler
- 6: Interdigitalstrukturen
- 7: Empfängerwandler
- 8: Nitridschicht
- 9: Einzelfinger
- 10: Kondensator
- 11: Kondensator
- 12: Verstärker
- 13: Verstärker
- 14: Subtraktionsglied
- 15: Verstärker
- 16: Verzögerungsstrecke
- 17: Phasenschieber
- 18: Phasencomparator
- 19: Digitale Verzögerungsleitung
- 20: Quarzoszillator
- 21: Rechner
- 22: Akustisch weiches Dielektrikum
- 23: Voltage-Controlled-Oscillator
- 24: Bandpaßfilter

## Patentansprüche

1. Sensor, der mit einer dünnen Membran ausgestattet ist, die fähig ist, elektrische Ladungen zu speichern, und deren Oberfläche in Kontakt mit den zu messenden chemischen, biologischen und/oder anderen physikalischen Größen steht, wobei die Membran Teil eines elektromechanischen Resonanzkreises ist, der mit fortlaufenden akustischen Wellen arbeitet, der Membran liegen dabei als Sender und Empfänger für die fortlaufenden akustischen Plattenwellen je ein mit Interdigitalstrukturen ausgestatteter Wandler gegenüber, die als schmalbandige Filter wirken, wobei Senderwandler und Empfängerwandler in einem Streckenabstand zueinander angeordnet sind und das Signal des Empfängerwandlers kapazitiv erfaßt wird, weiterhin ist zwischen dem Ausgangssignal des Empfängerwandlers und dem Senderwandler eine geeignete elektronische Ansteuer- und Auswerteschaltung bzw. eine Rückkopplung vorgesehen und schließlich ist zwischen der Membran einerseits sowie dem Senderwandler und dem Empfängerwandler andererseits eine Gleichspannung angelegt, der am Senderwandler eine Wechselspannung überlagert wird,
**dadurch gekennzeichnet**,
daß die Erzeugung der akustischen Plattenwellen im Senderwandler (5) allein aufgrund elektrostatischer Anziehungskraft bzw. Anregung zwischen den Interdigitalstrukturen (4) des Senderwandlers (5) und der Membran (1) erfolgt, daß weiterhin das Ausgangssignal des Empfängerwandlers (7) auf kapazitivem Wege derart ausgekoppelt wird, daß dazu im Empfängerwandler (7) die Schwingungsamplitude der akustischen fortlaufenden Plattenwellen durch den aus den Interdigitalstrukturen (6) des Empfängerwandlers (7) und der Membran (1) gebildeten Kondensator gemessen wird, und daß schließlich sowohl senderseitig die Membran (1) und die Interdigitalstrukturen (4) des Senderwandlers (5), als auch empfängerseitig die Membran (1) und die Interdigitalstrukturen (6) des Empfängerwandlers (7) jeweils voneinander im räumlichen Abstand in Form eines Spaltes (3) getrennt angeordnet sind und daß die Membran (1) und die Interdigitalstrukturen (4) des Senderwandlers (5) sowie die Membran (1) und die Interdigitalstrukturen (6) des Empfängerwandlers (7) jeweils keine mechanisch feste Verbindung miteinander aufweisen, und daß deshalb in Form des schmalen Spaltes (3) ein Dielektrikum derart ausgebildet ist, daß in dem Dielektrikum eine Bewegung der Membran (1) zu den Interdigitalstrukturen hin möglich ist.

2. Sensor nach Anspruch 1,
**dadurch gekennzeichnet**,
daß die Membran allein aus einer homogenen Metallfolie besteht.

3. Sensor nach Anspruch 1,
**dadurch gekennzeichnet**,
daß die Membran aus einer Metallschicht besteht, die auf eine dünne nichtleitende Schicht aufgebracht ist.

4. Sensor nach Anspruch 3,
**dadurch gekennzeichnet**,
daß die nichtleitende Schicht aus Siliziumnitrid hergestellt ist, und daß die Metallschicht aufgedampft oder gesputtert ist.

5. Sensor nach einem oder mehreren der Ansprüche 1 bis 4,
**dadurch gekennzeichnet**,
daß die Membran mit einer inneren Zugspannung versehen ist.

6. Sensor nach einem oder mehreren der Ansprüche 1 bis 4,
**dadurch gekennzeichnet**,
daß beidseitig der Membran auf zwei Trägern Interdigitalstrukturen der Sender- und Empfängerwandler angeordnet sind,
daß sich dabei die Einzelfinger der Interdigitalstrukturen auf beiden Seiten der Membran gegenüber stehen,
und daß sowohl die nebeneinander auf den Trägern angeordneten Einzelfinger, als auch die sich direkt beidseitig an der Membran gegenüberliegenden Einzelfinger mit jeweils stetig wechselnder positiver und negativer Spannung angeregt werden.

7. Sensor nach einem oder mehreren der Ansprüche 1 bis 6,
**dadurch gekennzeichnet**,
daß in dem schmalen Spalt das Dielektrikum zwischen der Membran und den Interdigitalstrukturen der Sender- und Empfängerwandler aus Luft besteht.

8. Sensor nach einem oder mehreren der Ansprüche 1 bis 7,
**dadurch gekennzeichnet**,
daß in den schmalen Spalt zwischen der Membran und den Interdigitalstrukturen der Sender- und Empfängerwandler eine rauhe Isolationsschicht zur Erzeugung eines Luftpolsters eingebracht ist.

9. Sensor nach einem oder mehreren der Ansprüche 1 bis 6,
**dadurch gekennzeichnet**,
daß in dem schmalen Spalt zwischen der Membran und den Interdigitalstrukturen der Sender- und Empfängerwandler ein hermetisch abgeschlossener Luftspalt vorgesehen ist.

10. Sensor nach Anspruch 9,
**dadurch gekennzeichnet**,
daß der hermetisch abgeschlossene Luftspalt mit dem herrschenden Atmosphärendruck gefüllt ist.

11. Sensor nach einem oder mehreren der Ansprüche 1 bis 6,
**dadurch gekennzeichnet**,
daß in dem schmalen Spalt zwischen der Membran und den Interdigitalstrukturen der Sender- und Empfängerwandler eine dielektrische Feststoffstützstruktur mit hoher akustischer Impedanz eingefügt ist.

12. Sensor nach einem oder mehreren der Ansprüche 1 bis 6,
**dadurch gekennzeichnet**,
daß in dem schmalen Spalt das Dielektrikum zwischen der Membran und den Interdigitalstrukturen der Sender- und Empfängerwandler aus Flüssigkeit besteht.

13. Sensor nach einem oder mehreren der Ansprüche 1 bis 6 und 12,
**dadurch gekennzeichnet**,
daß die Membran beidseitig von Flüssigkeit umgeben ist.

14. Sensor nach einem oder mehreren der Ansprüche 1 bis 6 und 12,
**dadurch gekennzeichnet**,
daß in dem schmalen Spalt zwischen der Membran und den Interdigitalstrukturen der Sender- und Empfängerwandler ein hermetisch abgeschlossener Flüssigkeitsspalt vorgesehen ist.

15. Sensor nach einem oder mehreren der Ansprüche 1 bis 14,
**dadurch gekennzeichnet**,
daß jeweils bei beiden Interdigitalstrukturen der Sender- und Empfängerwandler die Einzelfinger im Abstand der halben Resonanzwellenlänge angeordnet sind, und daß jeweils die beiden Interdigitalstrukturen bei dem Sender- und Empfängerwandler mit einer Phasenverschiebung von 180° mit Wechselspannung angesteuert werden.

16. Sensor nach einem oder mehreren der Ansprüche 1 bis 15,
**dadurch gekennzeichnet**,
daß die beiden Interdigitalstrukturen von Sender- und Empfängerwandler gleich ausgebildet sind.

17. Sensor nach einem oder mehreren der Ansprüche 1 bis 16,
**dadurch gekennzeichnet**,
daß das Dielektrikum zwischen der Membran und den Interdigitalstrukturen der Sender- und Empfängerwandler jeweils gleich ausgebildet ist.

18. Sensor nach einem oder mehreren der Ansprüche 1 bis 17,
**dadurch gekennzeichnet**,
daß die Interdigitalstrukturen des Sender- und/oder des Empfängerwandlers verschiebbar ausgeführt sind.

19. Sensor nach einem oder mehreren der Ansprüche 1 bis 18,
**dadurch gekennzeichnet**,
daß die Membran auf der den Interdigitalstrukturen abgewandten Seite mit einer chemisch aktiven und selektiven Beschichtung versehen ist.

20. Sensor nach einem oder mehreren der Ansprüche 1 bis 19,
**dadurch gekennzeichnet**,
daß die Membran und/oder die Interdigitalstrukturen und/oder das Dielektrikum mikromechanisch hergestellt sind.

21. Sensor nach einem oder mehreren der Ansprüche 1 bis 20,
**dadurch gekennzeichnet**,
daß der Rand der Membran derartig geformt ist, daß ein Teil der Seiten der Membran zur akustischen Reflexionsunterdrückung gekrümmt und/oder abgeschrägt ausgeführt ist.

## Claims

1. Sensor, which is fitted with a thin membrane capable of storing electrical charges, and whose surface is in contact with the chemical, biological and/or other physical magnitudes to be measured, the membrane forming part of an electromechanical oscillating circuit which operates with continuous acoustic waves, converters each fitted with interdigital structures being opposite the membrane as emitter and receiver, said converters acting as narrow-band filters, emitter converter and receiver converter being disposed relative to one another by a track distance and the signal of the receiver converter being capacitively detected, further with provision between the output signal of the receiver converter and the emitter converter of an appropriate electronic energising and evaluation circuit, or of a feedback, and finally, between the membrane on the one hand and the emitter converter on the other hand, a d.c. voltage is applied, upon which an a.c. voltage is superimposed at the emitter converter,
characterised in that
the acoustic plate waves in the emitter converter (5) are generated only on the basis of electrostatic attractive force or energisation between the interdigital structures (4) of the emitter converter (5) and the membrane (1), further in that the output signal of the receiver converter (7) is capacitively decoupled in such a way that in addition in the receiver converter (7) the amplitude of oscillation of the continuous acoustic plate waves is measured by the condenser formed by the interdigital structures (6) of the receiver converter (7) and of the membrane (1), and finally in that, both on the emitter side, the membrane (1) and the interdigital structures (4) of the emitter converter (5), and on the receiver side the membrane (1) and the interdigital structures (6) of the receiver converter (7) are respectively disposed separate from one another at a physical distance in the form of a gap (3), and in that the membrane (1) and the interdigital structures (4) of the emitter converter (5), and the membrane (1) and the interdigital structures (6) of the receiver converter (7) have respectively no fixed mechanical connection with one another, and in that therefore in the form of the narrow gap (3) a dielectric is formed in such a way that a movement of the membrane (1) in the dielectric towards the interdigital structures is possible.

2. Sensor according to claim 1,
characterised in that
the membrane along comprises a homogeneous metal foil.

3. Sensor according to claim 1,
characterised in that
the membrane comprises a metal layer which is applied to a thin non-conductive layer.

4. Sensor according to claim 3,
characterised in that
the non-conductive layer is made from silicon nitride, and in that the metal layer is evaporated or sputtered on.

5. Sensor according to one or more of claims 1 to 4,
characterised in that
the membrane is provided with an internal tensile stress.

6. Sensor according to one or more of claims 1 to 4,
characterised in that
interdigital structures of the emitter and receiver converters are disposed on either side of the membrane on two carriers,
in that the individual fingers of the interdigital structures thus stand opposite one another on both sides of the membrane,
and in that both the individual fingers disposed next to one another on the carriers, and also the individual fingers standing directly opposite on the membrane are energised with respectively permanently alternating positive and negative voltage.

7. Sensor according to one or more of claims 1 to 6,
characterised in that,
in the narrow gap, the dielectric between the membrane and the interdigital structures of the emitter and receiver converters consists of air.

8. Sensor according to one or more of claims 1 to 7,
characterised in that,
in the narrow gap between the membrane and the interdigital structures of the emitter and receiver converters, there is inserted a rough insulating layer in order to produce an air cushion.

9. Sensor according to one or more of claims 1 to 6,
characterised in that,
in the narrow gap between the membrane and the interdigital structures of the emitter and receiver converters, a hermetically sealed air gap is provided.

10. Sensor according to claim 9,
characterised in that
the hermetically sealed air gap is filled with the predominating atmospheric pressure.

11. Sensor according to one or more of claims 1 to 6,
characterised in that,
in the narrow gap between the membrane and the interdigital structures of the emitter and receiver converters, there is inserted a dielectric solid-matter structure with high acoustic impedance.

12. Sensor according to one or more of claims 1 to 6,
characterised in that,
in the narrow gap, the dielectric between the membrane and the interdigital structures of the emitter and receiver converters consists of liquid.

13. Sensor according to one or more of claims 1 to 6 and 12,
characterised in that
the membrane is surrounded by liquid on both sides.

14. Sensor according to one or more of claims 1 to 6 and 12,
characterised in that,
in the narrow gap between the membrane and the interdigital structures of the emitter and receiver converters, a hermetically sealed liquid gap is provided.

15. Sensor according to one or more of claims 1 to 14,
characterised in that,
in each two interdigital structures of the emitter and receiver converters, the individual fingers are disposed at a spacing of half the resonance wavelength, and in that each two interdigital structures in the emitter and receiver converters are triggered by alternating voltage with a phase offset of 180°.

16. Sensor according to one or more of claims 1 to 15,
characterised in that
the two interdigital structures of emitter and receiver converters are of identical design.

17. Sensor according to one or more of claims 1 to 16,
characterised in that
the dielectric between the membrane and the interdigital structures of the emitter and receiver converters is in each case identical in design.

18. Sensor according to one or more of claims 1 to 176,
characterised in that
the interdigital structures of the emitter and/or receiver converter are constructed to be displaceable.

19. Sensor according to one or more of claims 1 to 18,
characterised in that
the membrane is provided on the side facing away from the interdigital structures with a chemically active and selective coating.

20. Sensor according to one or more of claims 1 to 19,
characterised in that
the membrane and/or the interdigital structures and/or the dielectric are produced micromechanically.

21. Sensor according to one or more of claims 1 to 20,
characterised in that
the edge of the membrane is so formed that a portion of the sides of the membrane is curved or chamfered for purposes of acoustic suppression.

## Revendications

1. Capteur muni d'une membrane mince susceptible d'accumuler des charges électriques et dont la surface est en contact avec les grandeurs chimiques, biologiques et/ou autres grandeurs physiques à mesurer, la membrane faisant partie d'un circuit résonant électromécanique, utilisant des ondes acoustiques continues, et en regard de la membrane, se trouvent des convertisseurs fonctionnant comme émetteurs et récepteurs des ondes de plaques acoustiques continues, ces convertisseurs étant équipés chacun de structures interdigitées, fonctionnant comme des filtres en bande étroite, le convertisseur d'émission et le convertisseur de réception étant écartés d'une certaine distance et le signal du convertisseur de réception est reçu de manière capacitive, et de plus, entre le signal de sortie du convertisseur de réception et le convertisseur d'émission, il y a un circuit électronique de commande et d'exploitation ou une rétroaction, et entre d'une part la membrane et d'autre part le convertisseur d'émission et de réception, on applique une tension continue qui ajoute une tension alternative au niveau du convertisseur d'émission,
caractérisé en ce que
les ondes de plaques acoustiques sont générées dans le convertisseur d'émission (5) uniquement par la force d'attraction ou l'excitation électrostatique entre les structures interdigitées (4) du convertisseur d'émission (5) et la membrane (1), et en outre le signal de sortie du convertisseur de réception (7) est découplé de manière capacitive pour mesurer dans le convertisseur de réception, l'amplitude d'oscillation des ondes de plaques continues acoustiques par le condensateur formé des structures interdigitées (6) du convertisseur de réception (7) et la membrane (1), et à la fois du côté de l'émission, la membrane (1) et les structures interdigitées (4) du convertisseur d'émission (5) de même que du côté de la réception, la membrane (1) et les structures interdigitées (6) du convertisseur de réception (7) sont chaque fois séparées dans l'espace sous la forme d'un intervalle (3) et la membrane (1) et les structures interdigitées (4) du convertisseur d'émission (5) ainsi que la membrane (1) et les structures interdigitées (6) du convertisseur de réception (7) ne présentent aucune liaisons mécaniques fixes entre elles et ainsi la forme de l'étroit intervalle (3) est constitué par un diélectrique permettant un mouvement de la membrane (1) par rapport aux structures interdigitées.

2. Capteur selon la revendication 1,
caractérisé en ce que
la membrane seule est une feuille métallique homogène.

3. Capteur selon la revendication 1,
caractérisé en ce que
la membrane est une feuille métallique appliquée sur une couche mince non conductrice.

4. Capteur selon la revendication 3,
caractérisé en ce que
la couche non conductrice est en nitrure de silicium et la couche métallique est réalisée par dépôt à la vapeur ou projection.

5. Capteur selon une ou plusieurs des revendications 1 à 4,
caractérisé en ce que
la membrane présente une traction interne.

6. Capteur selon une ou plusieurs des revendications 1 à 4,
caractérisé en ce que
des deux côtés de la membrane, deux supports comportent des structures interdigitées des convertisseurs d'émission et de réception,
les différents doigts des structures interdigitées sont en regard l'un de l'autre des deux côtés de la membrane,
et en ce que à la fois les différents doigts juxtaposés sur les supports ainsi que les différents doigts opposés directement des deux côtés de la membrane, sont excités chaque fois par une tension positive et négative alternant en continu.

7. Capteur selon une ou plusieurs des revendications 1 à 6,
caractérisé en ce que
le diélectrique dans l'intervalle (3) entre la membrane des , structures interdigitées des convertisseurs d'émission et de réception est de l'air.

8. Capteur selon une ou plusieurs des revendications 1 à 7,
caractérisé en ce que
dans l'intervalle étroit entre la membrane et les structures interdigitées des convertisseurs d'émission et de réception, il est prévu une couche rugueuse d'isolation créant un coussin d'air.

9. Capteur selon une ou plusieurs des revendications 1 à 6,
caractérisé en ce que
dans l'intervalle (3) entre la membrane et les structures interdigitées des convertisseurs d'émission et de réception il y a un intervalle d'air fermé de manière hermétique.

10. Capteur selon la revendication 9,
caractérisé en ce que
l'intervalle d'air fermé de manière hermétique est rempli à la pression atmosphérique.

11. Capteur selon une ou plusieurs des revendications 1 à 6,
caractérisé en ce que
l'intervalle étroit entre la membrane et les structures interdigitées des convertisseurs d'émission et de réception comporte une structure diélectrique de matière solide à forte impédance acoustique.

12. Capteur selon une ou plusieurs des revendications 1 à 6,
caractérisé en ce que
dans l'intervalle étroit, le diélectrique entre la membrane et les structures interdigitées des convertisseurs d'émission et de réception est du liquide.

13. Capteur selon une ou plusieurs des revendications 1 à 6 et 12,
caractérisé en ce que
la membrane est entourée de liquide sur ses deux faces.

14. Capteur selon une ou plusieurs des revendications 1 à 6 et 12,
caractérisé en ce que
dans l'intervalle étroit entre la membrane et les structures interdigitées des convertisseurs d'émission et de réception il y a un intervalle de liquide fermé de manière hermétique.

15. Capteur selon une ou plusieurs des revendications 1 à 14,
caractérisé en ce que
chaque fois pour les deux structures interdigitées des convertisseurs d'émission et de réception, les différents doigts sont répartis suivant un intervalle correspondant à la demi longueur d'ondes de résonance et chaque fois les deux structures interdigitées du convertisseur d'émission et du convertisseur de réception sont commandées avec un déphasage de 180° par une tension alternative.

16. Capteur selon une ou plusieurs des revendications 1 à 15,
caractérisé en ce que
les deux structures interdigitées des convertisseur d'émission et de réception sont identiques.

17. Capteur selon une ou plusieurs des revendications 1 à 16,
caractérisé en ce que
le diélectrique entre la membrane et les structures interdigitées des convertisseurs d'émission et de réception sont identiques.

18. Capteur selon une ou plusieurs des revendications 1 à 17,
caractérisé en ce que
les structures interdigitées des convertisseurs d'émission et/ou de réception peuvent coulisser.

19. Capteur selon une ou plusieurs des revendications 1 à 18,
caractérisé en ce que
la membrane est munie sur sa face opposée aux structures interdigitées, d'un revêtement chimiquement actif et sélectif.

20. Capteur selon une ou plusieurs des revendications 1 à 19,
caractérisé en ce que
la membrane et/ou les structures interdigitées et/ou le diélectrique, sont réalisés en micromécanique.

21. Capteur selon une ou plusieurs des revendications 1 à 20,
caractérisé en ce que
le bord de la membrane est formé pour qu'une partie des côtés de la membrane soit cintrée et/ou en biais pour supprimer les réflexions acoustiques.
